Europäisches Patentamt

**European Patent Office**

**Office européen des brevets**

(19)

(11) Veröffentlichungsnummer: **0 044 983**
A2

(12) **EUROPÄISCHE PATENTANMELDUNG**

(21) Anmeldenummer: **81105352.9**

(51) Int. Cl.³: **B 23 Q 5/40,** B 23 Q 11/00

(22) Anmeldetag: **09.07.81**

(30) Priorität: **25.07.80 DE 3028349**

(43) Veröffentlichungstag der Anmeldung: **03.02.82**
**Patentblatt 82/5**

(84) Benannte Vertragsstaaten: **AT CH FR GB IT LI**

(71) Anmelder: **Friedrich Deckel Aktiengesellschaft,**
**Plinganserstrasse 150, D-8000 München 70 (DE)**

(72) Erfinder: **Geiger, Michael, Ina-Seidel-Weg 8,**
**D-8130 Starnberg (DE)**
Erfinder: **Finsterwalder, Bernd, Waldesruhe 19,**
**D-8000 München 70 (DE)**
Erfinder: **Kagerer, Franz, Ludwig-Bralile-Strasse 6,**
**D-8000 München 70 (DE)**
Erfinder: **Ullmann, Gernot, Beim Arberstein 7,**
**D-8156 Otterfing (DE)**

(54) **Antriebseinrichtung für eine Vorschub-Gewindespindel.**

(57) Antriebseinrichtung für eine Vorschub-Gewindespindel für Werkzeugmaschinen oder dergleichen, wobei die Gewindespindel sowohl von einem Antriebsmotor als auch von einem durch axiale Verschiebung einkuppelbaren Handrad antreibbar ist. Dabei bleibt auch bei Handbetrieb der Antriebsmotor mit der Gewindespindel verbunden. Durch die Einkuppelbewegung des Handrades wird jedoch die bei Motorstillstand an sich wirksame Motorbremse gelöst und die Stromzufuhr zum Antriebsmotor gesperrt.

EP 0 044 983 A2

- 1 -

## Antriebseinrichtung für eine Vorschub-Gewindespindel

Die vorliegende Erfindung betrifft eine Antriebsvorrichtung der im Oberbegriff des Anspruchs 1 genannten Art.

Bei manchen Werkzeugmaschinen, insbesondere bei Universalfräs- und -bohrmaschinen besteht die Forderung, daß ihre Einricht- und/oder Vorschubbewegungen sowohl von Hand als auch motorisch durchführbar sein sollen. Das Handrad wird im allgemeinen erst dann durch axiale Verschiebung eingekuppelt, wenn es gebraucht wird. Während des Motorbetriebes ist es aus Sicherheitsgründen von der Gewindespindel abgekuppelt.

Eine derartige Anordnung, vor allem in Verbindung mit einer modernen, nicht selbsthemmenden Kugelrollspindel, weist einige von der praktischen Handhabung her bedingte Probleme auf. Während des motorischen Vorschubbetriebes ist der Antriebsmotor selbst in der Lage, alle durch Gewichts- oder Bearbeitungskräfte (z. B. beim Gleichlauffräsen) auf den Motor rückwirkenden Kräfte aufzunehmen. Im Stillstand, wenn der Motor stromlos ist, muß die Antriebseinrichtung in geeigneter Weise gebremst oder der dadurch angetriebene Maschinenschlitten geklemmt werden, damit die eingefahrene Position nicht verlorengeht.

Diese Bremse (oder Klemmung) steht jedoch einer manuellen Vorschubbetätigung im Wege, da sie von Hand nicht überwunden werden kann.

Es ist deshalb schon vorgeschlagen worden, den Antriebsmotor während des Handbetriebes vollständig von der Gewindespindel abzukuppeln. Diese Lösung ist jedoch sehr aufwendig, da sie zusätzlich zu der ohnehin vorhandenen Bremse noch eine Schaltkupplung erforderlich macht.

Es ist die Aufgabe der vorliegenden Erfindung, eine Einrichtung der gattungsgemäßen Art zu schaffen, bei der mit einfachen Mitteln und bei völliger Sicherheit gegen Fehlbedienung wahlweise ein motorischer oder manueller Vorschubbetrieb möglich ist.

Diese Aufgabe ist durch die im Kennzeichen des Anspruches 1 bezeichneten Merkmale gelöst.

Der Antriebsmotor bleibt auch während des Handbetriebes mit der Gewindespindel verbunden, wird also immer mitgedreht. Die Schwungmasse moderner, kompakter Antriebsmotoren ist dabei gegenüber den übrigen zu bewegenden Massen relativ gering, so daß sie kaum ins Gewicht fällt. Die Bremse wird beim Einkuppeln des Handrades automatisch gelöst, so daß sie den Handbetrieb nicht mehr behindert. Gleichzeitig wird eine zusätzliche Anlaufsperre für den Antriebsmotor geschaltet, um ein versehentliches Anlaufen des jetzt ungebremsten Motors bei eingekuppeltem Handrad auszuschließen.

Nach einem Merkmal der Erfindung ist vorgesehen, daß der durch das Handrad betätigbare Schalter als elektrischer Schalter und die Bremse des Antriebsmotors als elektrisch lösbare Permanentmagnetbremse ausgebildet ist. Grundsätzlich sind auch mechanische, hydraulische o. ä. Lösungen möglich, die oben aufgezeigte elektrische Lösung ist jedoch besonders einfach und preiswert. Die Permanentmagnetbremse bringt bei Stromlosigkeit ihre volle Bremskraft auf.

Zum Lösen wird der Magnetfluß des Permanentmagneten elektrisch verwirbelt und damit unschädlich gemacht, so daß die Bremse durch Federkraft abgehoben wird.

Die Anlaufsperre für den Antriebsmotor kann erfindungsgemäß als einfacher Unterbrecherschalter in der Stromzuführung zum Motor ausgebildet sein.

Um die bei der Verwendung von nicht selbsthemmenden Kugelrollspindeln o. dgl. auf den Handantrieb rückwirkenden Gewichts- und Bearbeitungskräfte (Gleichlauffräsen) wenigstens teilweise aufzufangen, ist erfindungsgemäß vorgesehen, daß das Handrad auf einer eigenen, im entkuppelten Zustand desselben von der Gewindespindel vollständig getrennten Welle angeordnet ist und daß diese Welle eine in ihrer Bremskraft einstellbare Bremse aufweist. Diese kann beispielsweise als federbelastete Reibungsbremse mit veränderbarer Federvorspannung ausgebildet sein. Die Bremse wirkt nur auf die Handradwelle, d. h. bei ausgekuppeltem Handrad während des motorischen Betriebs belastet sie die Antriebseinrichtung nicht.

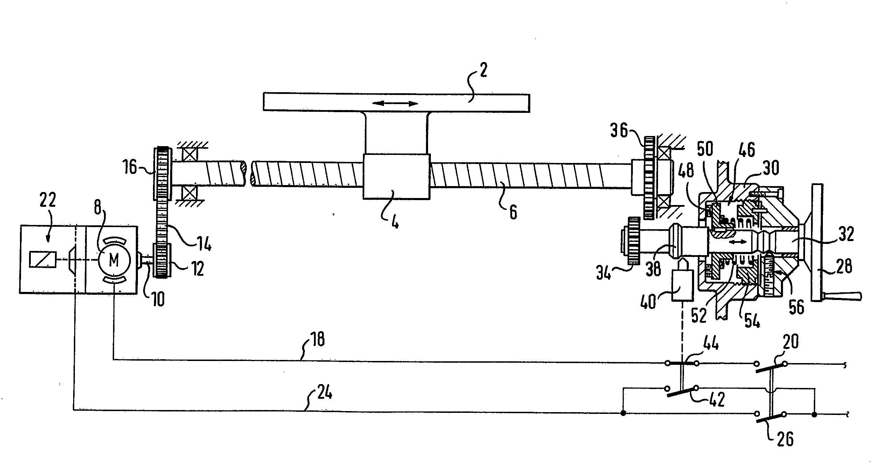

Ein Ausführungsbeispiel der Erfindung ist in der Zeichnung dargestellt und im folgenden näher beschrieben.

Die Figur zeigt schematisch eine Antriebseinrichtung für den Werkstücktisch einer Werkzeugmaschine.

Dieser Werkstücktisch 2 ist über eine Spindelmutter 4 mit der Gewindespindel 6, die z. B. als Kugelrollspindel ausgebildet sein kann, verbunden. Je nach Drehrichtung der Gewindespindel 6 wird der Werkstücktisch 2 in der Figur nach rechts oder links verschoben.

Zum Antrieb der Gewindespindel dient einmal ein Antriebsmotor 8. Die auf dessen Abtriebswelle 10 angeordnete Rie- menscheibe 12 ist über einen Zahnriemen 14 mit der auf der Gewindespindel 6 befestigten Riemenscheibe 16 verbunden. Die Steuerung des Antriebsmotors 8 erfolgt über eine elektrische Zuleitung 18 und einen schematisch dargestellten Schaltkontakt 20 z. B. durch eine nicht näher dargestellte numerische Steuereinrichtung.

Der Antriebsmotor 8 ist mit einer Bremse 22 versehen. Diese ist als sogenannte Permanentmagnetbremse ausgebildet, die im stromlosen Zustand eine Bremskraft auf die Welle des Antriebsmotors 8 aufbringt. Das Lösen der Bremse 22 erfolgt über eine elektrische Leitung 24 und einen Schaltkontakt 26, welcher mit dem Schaltkontakt 20 gekoppelt sein kann. Durch Schließen des Schaltkontaktes 26 wird der Bremse 22 Strom zugeführt. Dieser hebt die Wirkung des Permanentmagneten der Bremse 22 auf, so daß eine Feder die Bremse löst.

Am rechten Ende der Gewindespindel 6 ist die Einrichtung für den Handantrieb der Gewindespindel 6 angeordnet. Ein Handrad 28 ist auf einer im Maschinengehäuse 30 drehbar und axial verschiebbar gelagerten Welle 32 befestigt. An dem dem Handrad gegenüberliegenden Ende der Welle 32 ist ein Zahnrad 34 aufgekeilt. Durch Verschieben der Welle 32 nach rechts wird das Zahnrad 34 mit dem auf der Gewindespindel 6 angeordneten Zahnrad 36 gekuppelt, so daß die Gewindespindel von Hand gedreht werden kann.

Beim Verschieben der Welle 32 nach rechts wird gleichzeitig über den auf der Welle angeordneten Ringnocken 38 ein elektrischer Schalter 40 betätigt, welcher seinerseits die schematisch dargestellten Schaltkontakte 42 und 44 betä- tigt. Über den Schaltkontakt 42 wird der Schaltkontakt 26 überbrückt, d. h. die bei ausgeschaltetem Antriebsmotor 8 an sich angezogene Bremse 22 durch Stromzufuhr gelöst. Der Schaltkontakt 44 wird geöffnet, um auf diese Weise die Zuleitung 18 zum Antriebsmotor 8 nochmals zu unterbrechen und ein Anlaufen desselben auch bei versehentlichem Schließen des Schaltkontaktes 20 unmöglich zu machen.

Der Welle 32 ist eine Bremse 46 zugeordnet. Diese besteht im wesentlichen aus einem im Gehäuse 30 angeordneten Reibbelag 48 sowie einer auf der Welle drehfest, aber axial verschieblich angeordneten Bremsscheibe 50, welche durch eine Druckfeder 52 gegen den Reibbelag 48 gedrückt wird. Die Druckfeder 52 stützt sich gegen einen in das Gehäuse 30 einschraubbaren Schraubdeckel 54 ab, über den die Vorspannung der Druckfeder 52 und damit die Reibkraft verändert werden kann. Die Bremse 46 dient dazu, die auf den Handantrieb rückwirkenden Bearbeitungskräfte wenigstens teilweise aufzufangen.

Die beiden Stellungen des Handrades 28 werden durch eine einfache Kugelraster-Einrichtung 56 fixiert.

Es sei angemerkt, daß die Figur nur schematisch ist und daß insbesondere die Ansteuerung des Antriebsmotors 8 und der Bremse 22 anstatt über die Schaltkontakte 20, 26 bzw. 42, 44 über NC-Steuereinrichtungen erfolgt. In einer derartigen Steuereinrichtung ist beispielsweise auch eine spezielle Logik vorgesehen, welche beim Einkuppeln des Handrades während des motorischen Betriebes den Antriebsmotor 8 zunächst schlagartig bremst und erst nach vollständigem Stillstand die Bremse 22 wieder löst, um eine Verbindung des laufenden Antriebsmotors mit dem Handrad zu verhindern.

- 6 -

**Patentansprüche:**

1. Antriebseinrichtung für eine Vorschub-Gewindespindel für Werkzeugmaschinen o. dgl., umfassend einen mit der Gewindespindel drehverbundenen Antriebsmotor sowie ein mit der Gewindespindel durch axiale Verschiebung desselben kuppelbares Handrad,

dadurch gekennzeichnet,

daß ein durch das Verschieben des Handrades (28) betätigbarer Schalter (40) o. dgl. vorgesehen ist, welcher bei Einkuppeln des Handrades (28) eine über diesen Schalter (40) betätigbare Bremse (22) des Antriebsmotors (8) löst und eine Anlaufsperre (44) für den Antriebsmotor (8) betätigt.

2. Antriebseinrichtung nach Anspruch 1, dadurch gekennzeichnet, daß der Schalter (40) als elektrischer Schalter und die Bremse (22) des Antriebsmotors (8) als elektrisch lösbare Permanentmagnetbremse ausgebildet sind.

3. Antriebseinrichtung nach einem der Ansprüche 1 oder 2, dadurch gekennzeichnet, daß die Anlaufsperre für den Antriebsmotor (8) als Unterbrecherschalter (44) für die Stromzufuhr zum Antriebsmotor (8) ausgebildet ist.

4. Antriebseinrichtung nach einem der Ansprüche 1 bis 3, insbesondere zum Antrieb einer Kugelrollspindel, dadurch gekennzeichnet, daß das Handrad (28) auf einer eigenen, im entkuppelten Zustand desselben von der Gewindespindel (6) vollständig getrennten Welle (32) angeordnet ist und daß diese Welle (32) eine in ihrer Bremskraft einstellbare Bremse (46) aufweist.

5. Antriebseinrichtung nach Anspruch 4, dadurch gekennzeichnet, daß die Bremse (46) für die Welle (32) des
Handrades (28) als federbelastete Reibungsbremse mit
veränderbarer Federspannung ausgebildet ist.